# FASCICULE DE BREVET EUROPEEN

(11) **EP 4 327 165 B1**
(45) Date de publication et mention de la délivrance du brevet: **22.07.2026**
(21) Numéro de dépôt: 22723118.0
(22) Date de dépôt: 14.04.2022
(51) Int. Cl.: G04B 17/06, G04B 31/08, G04B 13/02, G04B 15/14, B23K 26/0622, B23K 26/362, B23K 26/40, G04B 43/00, G04D 3/00

(54) **PROCEDE DE FABRICATION D'UN AXE DE PIVOTEMENT HORLOGER ET AXE DE PIVOTEMENT HORLOGER OBTENU PAR LEDIT PROCEDE**
DREHACHSE EINES UHRWERKS UND VERFAHREN ZUR HERSTELLUNG EINER SOLCHEN DREHACHSE
SWIVELLING TIMEPIECE AXIS AND METHOD FOR MANUFACTURING SUCH A SWIVELLING TIMEPIECE AXIS

(30) Priorité: 20.04.2021 EP 21169381
(43) Date de publication de la demande: 28.02.2024
(60) Demande divisionnaire: 26185244.6
(73) Titulaire: Acrotec R&D SA, 2017 Boudry (CH)
(72) Inventeur: JACOT, Philippe, 2022 Bevaix (CH); CALDERON, Ivan, 2014 Bole (CH)
(74) Mandataire: Bovard SA Neuchâtel
(86) Numéro de dépôt international: PCT/EP2022/060146
(87) Numéro de publication internationale: WO 2022/223478

(56) Documents cités:
- EP-A1- 3 722 887
- WO-A1-2020/212282
- CH-A1- 716 669

## Description

### Domaine technique

La présente invention concerne un axe de pivotement horloger comprenant au moins un pivot à au moins une de ses extrémités.

La présente invention concerne également un mouvement horloger et une pièce d'horlogerie comprenant un tel axe de pivotement horloger.

La présente invention concerne également un procédé de fabrication d'un tel axe de pivotement horloger.

### Etat de la technique

De tels axes de pivotement horlogers sont utilisés pour le montage en rotation de composants horlogers, tels que les balanciers.

Traditionnellement, un axe de pivotement horloger est fabriqué en acier à partir d'une barre en acier trempable. La fabrication d'un tel axe en acier consiste à réaliser des opérations de décolletage de précision pour définir différentes surfaces actives (portée, épaulement, pivots etc.) puis à soumettre l'axe décolleté à des opérations de traitement thermique comprenant au moins une trempe pour améliorer la dureté de l'axe et un ou plusieurs revenus pour en améliorer la ténacité. Les opérations de traitements thermiques sont suivies d'une opération de roulage des pivots des axes, opération qui consiste à polir les pivots pour les amener aux dimensions requises. Au cours de cette opération de roulage, la dureté ainsi que la rugosité des pivots sont encore améliorées via un écrouissage de surface. On obtient ainsi, en fin de processus, un axe présentant des pivots aux dimensions, dureté et rugosité requises. Il est à noter que le roulage peut difficilement être mis en œuvre avec des matériaux dont la dureté est supérieure à 600 HV.

Les axes de pivotement horlogers, et notamment les axes de précision tels que les axes de balancier, utilisés classiquement dans les mouvements d'horlogerie mécaniques, sont réalisés dans des nuances d'aciers de décolletage qui sont généralement des aciers martensitiques au carbone incluant du plomb et des sulfures de manganèse pour améliorer leur usinabilité. Un acier de ce type connu, désigné 20 AP, est typiquement utilisé pour ces applications. Des alternatives sans plomb comme la nuance Finemac sont aussi utilisées.

Ce type de matériau a l'avantage d'être facilement usinable, en particulier d'être apte au décolletage et présente, après des traitements de trempe et de revenu adéquats, des propriétés mécaniques élevées très intéressantes pour la réalisation d'axes de pivotement horlogers. Ces aciers présentent en particulier une résistance à l'usure et une dureté après traitement thermique élevées. Typiquement la dureté des pivots d'un axe réalisé en acier 20 AP peut atteindre une dureté de surface dépassant les 700 HV après traitement thermique et roulage.

Bien que fournissant des propriétés mécaniques satisfaisantes pour les applications horlogères décrites ci-dessus, ce type de matériau présente l'inconvénient d'être magnétique et de pouvoir perturber la marche d'une montre après avoir été soumis à un champ magnétique, et ce notamment lorsque ce matériau est utilisé pour la réalisation d'un axe de balancier coopérant avec un balancier spiral en matériau ferromagnétique. On notera également que ces aciers martensitiques sont également sensibles à la corrosion.

Pour tenter de remédier à ces inconvénients, une solution a été proposée, consistant à utiliser des aciers inoxydables austénitiques qui présentent la particularité d'être amagnétiques, c'est-à-dire du type paramagnétique, diamagnétique ou antiferromagnétique, dont la perméabilité magnétique relative est inférieure ou égale à 1.01.

Toutefois, ces aciers austénitiques présentent une structure cristallographique ne permettant pas de les tremper et d'atteindre des duretés et donc des résistances à l'usure compatibles avec les exigences requises pour la réalisation d'axes de pivotement horlogers. Un moyen d'augmenter la dureté de ces aciers est l'écrouissage, toutefois cette opération de durcissement ne permet pas d'obtenir des duretés supérieures à 500 HV pour ce type de matériau. Par conséquent, dans le cadre de pièces nécessitant une grande résistance à l'usure par frottement et devant avoir des pivots ne présentant pas ou peu de risques de casse ou de déformation, l'utilisation de ce type d'aciers reste limitée.

Une autre solution proposée a consisté à déposer sur les axes de pivotement des couches dures de matériaux tels que le carbone amorphe connu sous la dénomination anglaise «diamond like carbon» (DLC). Or, on a constaté des risques importants de délamination de la couche dure et donc la formation de débris qui peuvent circuler à l'intérieur du mouvement horloger et venir perturber le fonctionnement de ce dernier, ce qui n'est pas satisfaisant.

Une autre approche a été envisagée pour remédier aux inconvénients des aciers inoxydables austénitiques, à savoir le durcissement superficiel de ces axes de pivotement par nitruration, carburation ou nitrocarburation. Toutefois ces traitements sont connus pour entraîner une perte importante de la résistance à la corrosion en raison de la réaction de l'azote et/ou du carbone avec le chrome de l'acier et la formation de nitrure de chrome et/ou de carbure de chrome causant un appauvrissement localisé de la matrice en chrome, ce qui est préjudiciable pour l'application horlogère souhaitée.

Une opération supplémentaire de dépôt de Ni chimique semble nécessaire afin de pallier ces problèmes de corrosion, ce qui complique et renchérit fortement le processus de fabrication.

D'autres approches existent encore, comme les réalisations en alliages de titane, métal dur, certains oxydes ou céramiques. Toutefois l'utilisation de ces matériaux ne permet pas d'obtenir des performances satisfaisantes propres aux axes de pivotement horlogers, autres que l'amagnétisme.

Une dernière approche est proposée dans la demande de brevet CH 716 669 qui décrit un procédé de fabrication d'un axe de balancier en verre métallique comprenant une étape de fabrication d'une ébauche en verre métallique ainsi qu'une étape de terminaison de l'ébauche pour obtenir l'arbre de balancier. L'étape de terminaison peut être précédée par une étape d'usinage. Pour obtenir un axe de balancier, cette étape d'usinage doit être suivie de l'étape de terminaison qui fait référence à des opérations de finition, telles que traitement de surfaces, rectification, roulage, polissage laser ou mécano-chimique, tribofinition ou polissage vrac. Une telle étape de terminaison signifie une interruption du processus après l'étape d'usinage et de déplacer l'axe de balancier afin par exemple de le positionner sur une autre machine pour réaliser l'opération de finition en tant que telle, différente d'un usinage. Cela signifie un temps de production important pour obtenir un axe de balancier terminé. De telles étapes de terminaison présentent également l'inconvénient de se faire au détriment de la qualité géométrique de la pièce (arrondissement des surfaces, pertes de précision, etc.). De plus, le polissage laser implique l'utilisation de laser continu ou de laser avec des durées d'impulsion allant jusqu'à 100 ns. Le laser attaque la pièce de façon normale à la surface à traiter, et met en fusion une partie de ladite surface, le lissage se faisant grâce à la tension interfaciale, sans enlèvement de matière. L'inconvénient est que le polissage laser se caractérise par une distribution de la rugosité Ra liée à la formation d'ondulations donnant un effet « mirage ». En outre, dans le cas d'un axe en verre métallique, il y a un risque que l'utilisation d'un tel laser, qui augmente la température de surface de la pièce, entraine la disparition du caractère amorphe du matériau après le processus.

La présente invention vise à remédier à ces inconvénients en proposant un procédé de fabrication d'un axe de pivotement horloger en verre métallique, notamment un axe de pivotement en verre métallique amagnétique, et plus particulièrement un axe de précision, permettant une réalisation extrêmement simple et économique.

Un autre but de l'invention est de proposer un axe de pivotement horloger en verre métallique, et plus particulièrement un axe de pivotement en verre métallique amagnétique, présentant les propriétés mécaniques compatibles avec les exigences de résistance à l'usure et aux chocs requises dans le domaine horloger, limitant la sensibilité aux champs magnétiques, et présentant au moins au niveau des pivots, une rugosité Ra extrêmement faible.

### Divulgation de l'invention

A cet effet, la présente invention concerne un procédé de fabrication d'un axe de pivotement horloger comprenant au moins un pivot à au moins une de ses extrémités, au moins ledit pivot étant entièrement réalisé en verre métallique, ledit procédé comprenant :
a) une étape de fabrication d'une ébauche de l'axe de pivotement horloger comprenant, à au moins extrémité, au moins une partie constituée de verre métallique et destinée à constituer un pivot ; et
b) une dernière étape consistant en un usinage de précision sans force au moins de la partie constituée de verre métallique afin d'obtenir au moins un pivot entièrement réalisé en verre métallique fini.

Le procédé selon l'invention permet de diminuer notablement le temps de production et de réduire le nombre d'opérations nécessaires pour la fabrication d'un axe de pivotement horloger, réalisé dans un matériau amagnétique tout en présentant les propriétés mécaniques compatibles avec les exigences de résistance à l'usure et aux chocs requises dans le domaine horloger, par comparaison avec les axes de pivotement horlogers fabriqués traditionnellement à partir de différents alliages métalliques. De façon remarquable, le procédé selon l'invention permet d'éviter les opérations de traitement thermique (trempes, revenus, recuits, etc.) ainsi que les opérations de roulage ou autre opération de finition.

La présente invention concerne également un axe de pivotement horloger obtenu par le procédé tel que défini ci-dessus, ledit un axe de pivotement horloger comprenant au moins un pivot à au moins une de ses extrémités, au moins ledit pivot étant entièrement réalisé en verre métallique, au moins le pivot présentant une rugosité Ra inférieure ou égale à 50 nm ± 20%, de préférence inférieure ou égale à 25 nm, de préférence inférieure ou égale à 20 nm, de préférence inférieure ou égale à 15 nm, et préférentiellement inférieure ou égale à 12 nm, plus préférentiellement inférieure ou égale à 10 nm, et plus préférentiellement comprise entre 5 nm et 9 nm, bornes incluses.

D'une manière particulièrement avantageuse, l'axe de pivotement horloger est intégralement réalisé en verre métallique.

Avantageusement, ledit axe de pivotement horloger est agencé pour former un axe de balancier.

Ainsi, la dureté de surface des pivots de l'axe de pivotement horloger selon l'invention est celle du verre métallique, atteignant et même dépassant des valeurs de 700 HV.

De plus, l'utilisation de verre métallique permet d'obtenir un axe de pivotement horloger qui présente une déformation élastique supérieure ou égale à 2%, soit nettement plus élevée que celle des axes de pivotement horlogers connus.

En outre, le coefficient de frottement du verre métallique étant très faible, le pivot peut présenter un coefficient de frottement dynamique inférieur ou égal à 0.2 sans lubrification.

De plus, le verre métallique est amagnétique et présente une grande résistance à la corrosion.

De ce fait, toutes les performances d'un axe de pivotement horloger amagnétique actuel se trouvent améliorées.

La présente invention concerne également un mouvement horloger et une pièce d'horlogerie comprenant un axe de pivotement horloger tel que défini ci-dessus.

### Brève description des dessins

D'autres caractéristiques et avantages de la présente invention apparaîtront à la lecture de la description détaillée suivante d'un mode de réalisation de l'invention, donné à titre d'exemple non limitatif, et faite en référence aux dessins annexés dans lesquels :
- la figure 1 est une vue schématisée d'un pivot d'un axe de pivotement selon l'invention; et
- la figure 2 est une représentation schématique des étapes d'un procédé selon l'invention.

### Modes de réalisation de l'invention

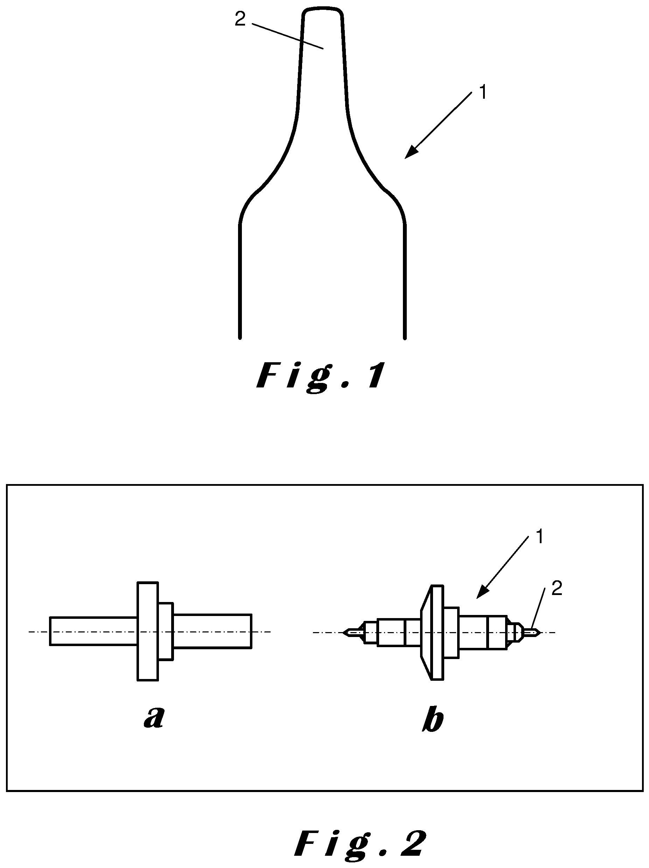

En référence à la figure 1, la présente invention concerne un axe de pivotement horloger 1 comprenant au moins un pivot 2 à au moins une de ses deux extrémités. Classiquement, l'axe de pivotement 1 comprend un pivot 2 à chacune de ses extrémités, lesdits pivots présentant une surface de révolution, et étant destinés à venir chacun pivoter dans un palier, typiquement dans un orifice d'une pierre ou rubis.

Le pivot 2 présente un diamètre extérieur inférieur ou égal à 200 µm, de préférence inférieur ou égal à 100 µm, préférentiellement inférieur ou égal à 90 µm, et plus préférentiellement inférieur ou égal à 70 µm.

De préférence, l'axe de pivotement horloger 1 est un axe de balancier, comportant une pluralité de sections de diamètres différents, définissant classiquement des portées et des épaulements arrangés le long d'un tigeron entre deux portions d'extrémité définissant les deux pivots, une seule extrémité étant représentée ici sur la figure 1. Bien évidemment, d'autres types d'axes de pivotement horlogers sont envisageables comme par exemple des axes de mobiles horlogers, typiquement des pignons d'échappement, ou encore des tiges d'ancre. Les pièces de ce type présentent au niveau du corps des diamètres inférieurs de préférence à 2 mm, et des pivots de diamètre inférieur de préférence à 0.2 mm comme décrit ci-dessus, avec une précision de quelques microns.

Au moins le pivot 2 est entièrement réalisé en verre métallique, appelé également alliage métallique amorphe. Cela signifie que le pivot 2 est intégralement constitué de verre métallique, et que le matériau constitutif d'au moins du pivot 2, et de préférence de tout l'axe de pivotement horloger 1, est un verre métallique, aucun autre matériau n'étant utilisé.

À la différence des verres d'oxyde classiques constitués de molécules de type SiO₂, les verres métalliques ou alliages métalliques amorphes sont principalement constitués d'atomes d'éléments métalliques qui forment une phase amorphe. Ils ne contiennent donc pas d'éléments tels que le carbone, l'oxygène ou l'azote. Ce ne sont donc pas des céramiques qui concernent les matériaux solides non métalliques et inorganiques.

La formation d'un verre métallique consiste à refroidir le métal fondu à une vitesse suffisamment rapide pour éviter toute cristallisation. Les règles de base concernant la formation des verres métalliques sont désormais connues de l'homme du métier et ne nécessitent pas ici de description détaillée.

Il existe de nombreuses familles d'alliages métalliques amorphes. On trouve ainsi par exemple les alliages à base de Nickel (Ni_{71,4}Cr_{5.5}Nb_{3.4}P₁₆B₃), à base de Palladium (Pd₇₉Ag_{3.5}P₆Si_{9.5}Ge₂), les alliages de Cuivre - Zirconium (Cu₆₄Zr₃₆, Cu₄₆Zr₄₂Al₇Y₅, Cu₄₆Zr₅₄, Cu₅₀Zr₄₅Ti₅), les alliages de Zirconium divers (Zr₂NiₓCu₍₁₋ₓ₎, Zr₄₁Ti₁₄Cu₁₃Ni₁₀Be₂₂, Zr₅₅Cu₃₀Al₁₀Ni₅, Zr₅₇Nb₅Al₁₀Cu_{15,4}Ni_{12,6} ou Zr₆₁Ti₄Nb₄Cu₁₄Ni₉Al₉) les alliages de Titane - Cuivre - Nickel (Ti₃₄Cu₄₇Ni₈Zr₁₁, Ti₅₀Cu₂₈Ni₁₅Sn₇), les alliages d'Aluminium - Yttrium - Fer (Al₈₅Y₁₀Fe₅, Al₈₈Y₉Fe₅, Al₈₈Y₅Fe₇) ou enfin les alliages de Magnésium - Cuivre (Mg₅₃Cu₃₇Nd₁₀, Mge₅Cu₂₅Tb₁₀).

Avantageusement, l'axe de pivotement horloger est intégralement constitué de verre métallique. Toutefois, l'utilisation de verre métallique peut être limitée aux pivots et au tigeron de l'axe.

D'une manière particulièrement avantageuse, le verre métallique est choisi pour être amagnétique de sorte que l'axe de pivotement horloger selon l'invention présente l'avantage d'être amagnétique afin de limiter sa sensibilité aux champs magnétiques.

Par exemple, on peut utiliser l'alliage Pd₇₉Ag_{3.5}P₆Si_{9.5}Ge₂ ou bien l'alliage Ni_{71.4}Cr_{5.5}Nb_{3.4}P_{16.7}B_{3.0}.

D'une manière particulièrement avantageuse, le pivot 2, et de préférence tout l'axe de pivotement horloger 1, selon l'invention, présente une dureté de surface supérieure ou égale à 700 HV, et de préférence supérieure ou égale à 800 HV, du fait de l'utilisation de verre métallique. Les méthodes d'essais de dureté Vickers sont définies dans les normes suivantes ASTM C1327 et ISO 6507.

Selon l'invention, le pivot 2, et de préférence tout l'axe de pivotement horloger 1, selon l'invention présente une rugosité Ra uniforme inférieure ou égale à 50 nm ± 20%, de préférence inférieure ou égale à 25 nm, de préférence inférieure ou égale à 20 nm, de préférence inférieure ou égale à 15 nm, et préférentiellement inférieure ou égale à 12 nm, plus préférentiellement inférieure ou égale à 10 nm, et plus préférentiellement comprise entre 5 nm et 9 nm, bornes incluses. La rugosité Ra est définie selon la norme ISO 4287.

Du fait de l'utilisation de verre métallique, le pivot 2, et de préférence tout l'axe de pivotement horloger 1, selon l'invention présente une déformation élastique (pourcentage d'allongement dans la direction de traction) supérieure ou égale à 0.5%, de préférence supérieure ou égale à 1.5%.

L'utilisation de verre métallique permet de réduire de façon très drastique le coefficient de frottement.

De ce fait, d'une manière particulièrement avantageuse, le pivot 2, et de préférence tout l'axe de pivotement horloger 1, selon l'invention présente un coefficient de frottement dynamique très faible, inférieur ou égal à 0.2, de préférence inférieur ou égal à 0.1.

De plus, d'une manière particulièrement avantageuse, le pivot 2, et de préférence tout l'axe de pivotement horloger 1, selon l'invention présente une ténacité supérieure ou égale à 100 MPa.m^{1/2}, de préférence supérieure ou égale à 200 MPa.m^{1/2} et une résistance à la traction Rm supérieure ou égale à 800 MPa, de préférence supérieure ou égale à 1000 MPa.

D'une manière particulièrement avantageuse, le pivot 2, et de préférence tout l'axe de pivotement horloger 1, selon l'invention présente un module de Young supérieur ou égal à 40 GPa, de préférence supérieur ou égal à 100 GPa.

Le module d'Young, le pourcentage de déformation élastique, la ténacité et la résistance à la traction sont mesurés et calculés par des essais de traction-compression connus de l'homme du métier.

Outre le fait d'être amagnétique, le verre métallique choisi est résistant à la corrosion.

Ainsi, outre le fait d'être amagnétique, au moins le pivot 2, et de préférence l'axe de pivotement horloger 1, selon l'invention présente toutes les performances satisfaisantes propres aux axes de pivotement horlogers pour lesquels on recherche, en surface, une dureté supérieure à 700 HV afin de résister à l'usure, un coefficient de frottement faible pour limiter la lubrification, un état lisse (Ra < 0.5 µm) pour le frottement et l'isochronisme, une résistance à la corrosion, et pour lesquels on recherche un cœur présentant une rigidité, une ténacité et une résistance à la rupture Rm élevées (haute limite élastique).

L'invention se rapporte également au procédé de fabrication d'un axe de pivotement horloger 1 comprenant au moins un pivot 2 à au moins une de ses extrémités, au moins ledit pivot 2 étant entièrement réalisé en verre métallique, notamment tel que décrit ci-dessus. Le procédé selon l'invention comporte avantageusement les étapes suivantes, décrites en relation avec la figure 2 :
a) une étape de fabrication d'une ébauche de l'axe de pivotement horloger 1 comprenant, à au moins une de ses deux extrémités, au moins une partie constituée intégralement de verre métallique et destinée à constituer un pivot ; et
b) une dernière étape consistant en un usinage de précision sans force au moins de la partie constituée intégralement de verre métallique afin d'obtenir au moins un pivot entièrement réalisé en verre métallique fini, c'est-à-dire qui présente sa configuration finale, c'est-à-dire toutes les caractéristiques requises pour son utilisation et sa fonction en tant qu'axe de pivotement, notamment en termes de dureté, de rugosité, de dimensions et de géométrie, et qui ne nécessite donc plus aucune autre étape de traitement ultérieure, telle que les traditionnelles étapes de terminaison ou de finition.

D'une manière avantageuse, l'axe de pivotement horloger 1 est constitué entièrement de verre métallique. Dans ce cas, l'étape a) peut être réalisée par moulage par injection. En effet, l'injection de ces alliages est très semblable à celle des thermoplastiques et des équipements actuels (par exemple la société Engel) sont proposés sur le marché. D'une manière particulièrement avantageuse, l'étape a) est mise en œuvre de manière à maximiser la terminaison de l'axe de pivotement horloger au stade de l'ébauche moulée.

Si nécessaire, les ébauches fabriquées lors de l'étape a) sont produites avec des cotes prévues pour la reprise.

D'une manière avantageuse, le procédé selon l'invention comprend, entre l'étape a) et l'étape b), une étape intermédiaire a') d'usinage de l'ébauche de l'axe de pivotement réalisée lors de l'étape a). Cette étape d'usinage peut être par exemple une étape de trovalisation de l'ébauche. Lors de cette étape a'), on peut obtenir des états de surface intermédiaire avec une rugosité Ra de l'ordre de 200 nm à 500 nm par exemple.

Si nécessaire, les ébauches réalisées lors de l'étape a) et/ou de l'étape a') peuvent présenter une surépaisseur minime, permettant d'obtenir les caractéristiques géométriques finales souhaitées lors de l'étape de finition b).

Après l'étape a) ou après l'étape a'), la dernière étape du procédé de l'invention est l'étape b) qui consiste en un usinage de précision sans force de l'axe de pivotement horloger, ou au moins de sa partie constituée intégralement de verre métallique destinée à constituer un pivot. Cette dernière étape b) permet avantageusement d'obtenir, en une seule et même étape, les mêmes résultats que la combinaison classique de l'étape d'usinage suivie de l'étape de terminaison ou finition. Aucune opération de finition ultérieure en tant que telle, comme une reprise, sur une autre machine pour terminer les axes de pivotement n'est nécessaire. Dans le procédé de l'invention, l'axe de pivotement est obtenu sans interruption du processus par un traitement continu, en une seule étape et sur une seule machine d'usinage à partir de l'ébauche d'axe. Le procédé de l'invention permet d'utiliser une seule machine d'usinage en continu, sans nécessiter d'interrompre le processus pour utiliser une autre machine pour mettre en œuvre une étape de terminaison quelconque.

Dans la présente description, on appelle usinage sans force un usinage non conventionnel selon lequel il n'y a pas d'action mécanique transmise par contact direct et effort entre un outil et la pièce, contrairement à un usinage conventionnel où il existe un contact direct entre l'outil et la pièce et dans lequel d'importantes forces de coupe sont impliquées. Un usinage sans force est donc un usinage sans contact direct entre la pièce à usiner et un outil d'usinage qui serait susceptible d'exercer un effort ou une contrainte sur ladite pièce.

D'une manière avantageuse, l'usinage de précision sans force réalisé lors de l'étape b) est un processus d'enlèvement de matière sans force par un tournage par femto laser, un tournage électrochimique (ECM), ou un tournage par électroérosion (par exemple EDM par fil).

Les opérations d'usinage de cette étape se font avantageusement par micro-usinage au laser pulsé femto seconde avec un laser de longueurs d'onde comprises par exemple entre 200 nm et 2000 nm, de préférence entre 400 nm et 1 000 nm, bornes incluses. Les paramètres du laser peuvent être par exemple : puissance moyenne entre 1 W et 100 W, énergie par pulse entre 20 µJ et 4000 µJ, fréquence entre 100 kHz et 1000 kHz, durée d'impulsion entre 100 fs et 2 ps. Le femto laser permet une ablation de matière sans transfert de chaleur au reste de la matière et non une fusion de surface qui est utilisée lors du polissage par laser dans les opérations de finition traditionnelles.

Les méthodes d'usinage ECM (electrochemical machining) et EDM (electrical discharge machining) peuvent aussi être utilisées pour l'étape de finition.

Grâce à l'usinage de précision sans force, notamment par femto laser, l'étape b) finale permet d'atteindre des états de surface avec une rugosité Ra uniforme de préférence inférieure ou égale à 500 nm. Plus particulièrement, en jouant sur la dernière profondeur de passe, sur la vitesse de rotation de l'axe de pivotement et sur l'oscillation du laser ajoutée à son mouvement primaire par rapport à l'ébauche d'axe, il est possible, d'une manière particulièrement avantageuse, d'obtenir à l'issue de l'étape b), au moins un pivot en verre métallique fini qui présente une rugosité Ra uniforme inférieure ou égale à 50 nm ± 20%, de préférence inférieure ou égale à 25 nm, de préférence inférieure ou égale à 20 nm, de préférence inférieure ou égale à 15 nm, et préférentiellement inférieure ou égale à 12 nm, plus préférentiellement inférieure ou égale à 10 nm, et plus préférentiellement comprise entre 5 nm et 9 nm, bornes incluses.

Notamment, pour un usinage de précision sans force par femto laser, on utilise de préférence un spot de diamètre inférieur ou égal à 8 µm, le faisceau laser attaquant l'axe de pivotement en rotation radialement. L'angle du cône du faisceau est de préférence inférieur à 4° et plus préférentiellement inférieur à 2°. D'une manière avantageuse, le système de pilotage du femto laser permet d'amener l'ébauche d'axe de façon extrêmement précise à 1 ou 2 µm de la cote finale, le dernier passage du femto laser étant prévu pour atteindre en même temps la cote et la rugosité Ra recherchées.

De plus, l'étape b) est avantageusement mise en œuvre sous soufflage permanent d'air ou d'azote afin d'évacuer la poussière générée par l'usinage. Une aspiration de cette même poussière est localisée face au soufflage.

Les pivots 2 obtenus présentant une telle rugosité Ra, il n'est plus nécessaire de prévoir, après l'étape b) une étape de finition, notamment une finition tribologique, telles qu'un roulage ou une tribofinition.

Ainsi, de manière particulièrement avantageuse, le procédé selon l'invention ne comprend, après l'étape b), aucune étape de terminaison ou finition sur une autre machine, notamment aucune étape de traitement tribologique, telles qu'un roulage ou une tribofinition, puisque le pivot intégralement réalisé en verre métallique finie obtenu à l'étape b) présente déjà les dimensions, la dureté et la rugosité requises, qui sont traditionnellement obtenues seulement après une opération de roulage et/ou de tribofinition.

Le procédé selon l'invention permet d'obtenir un axe de pivotement horloger amagnétique présentant toutes les propriétés mécaniques requises, notamment une haute limite élastique, une dureté très élevée, une très faible rugosité, de manière simple et économique. En effet, le procédé selon l'invention permet d'éviter les opérations de traitement thermique (trempes, revenus, recuits) et de roulage traditionnellement utilisées, de sorte que le nombre d'opérations nécessaires à la fabrication de l'axe de pivotement horloger est réduit, le temps de production étant considérablement diminué. En effet, le traitement de l'ébauche d'axe ne nécessite qu'une seule opération, et donc un seul serrage, pour obtenir un axe de pivotement fini. La dernière étape dudit procédé est une étape d'usinage qui permet d'obtenir un axe fini avec une certaine précision de rugosité Ra, en réalisant avantageusement en une seule étape usinage et finition, sans nécessiter une opération de finition ultérieure en tant que telle, comme une reprise, sur une autre machine pour terminer les pièces. L'axe de pivotement est obtenu sans interruption du processus par un traitement continu, en une seule étape et sur une seule machine d'usinage à partir de l'ébauche. Ainsi, contrairement aux procédés de fabrication traditionnels, le procédé de l'invention ne comprend aucune étape de terminaison dans une phase de finition qui signifie une interruption du processus après l'étape d'usinage afin de positionner la pièce sur une autre machine et réaliser une opération différente d'un usinage.

## Revendications

1. Procédé de fabrication d'un axe de pivotement horloger (1) comprenant au moins un pivot (2) à au moins une de ses extrémités, au moins ledit pivot (2) étant entièrement réalisé en verre métallique, ledit procédé comprenant:
a) une étape de fabrication d'une ébauche de l'axe de pivotement horloger (1) comprenant, à au moins une extrémité, au moins une partie constituée de verre métallique et destinée à constituer un pivot (2); **caractérisé en ce que** ledit procédé comprend
b) une dernière étape consistant en un usinage de précision sans force au moins de la partie constituée de verre métallique afin d'obtenir au moins un pivot (2) entièrement réalisé en verre métallique fini.

2. Procédé selon la revendication 1 dans lequel l'axe de pivotement horloger (1) est intégralement réalisé en verre métallique, **caractérisé en ce que** l'étape a) est réalisée par moulage par injection.

3. Procédé selon l'une des revendications 1 et 2, **caractérisé en ce qu'**il comprend, entre l'étape a) et l'étape b), une étape a') d'usinage de l'ébauche de l'axe de pivotement.

4. Procédé selon la revendication 3, **caractérisé en ce que** l'usinage de l'ébauche de l'axe de pivotement de l'étape a') est une trovalisation.

5. Procédé selon l'une des revendications précédentes, **caractérisé en ce que** l'usinage de précision sans force réalisé lors de l'étape b) est un tournage par femto laser, un tournage électrochimique, ou un tournage par électroérosion.

6. Procédé selon l'une des revendications précédentes, **caractérisé en ce qu'**au moins le pivot (2) entièrement réalisé en verre métallique fini obtenu à l'étape b) présente une rugosité Ra uniforme inférieure ou égale à 50 nm ± 20%, de préférence inférieure ou égale à 25 nm, de préférence inférieure ou égale à 20 nm, de préférence inférieure ou égale à 15 nm, et préférentiellement inférieure ou égale à 12 nm, plus préférentiellement inférieure ou égale à 10 nm, et plus préférentiellement comprise entre 5 nm et 9 nm, bornes incluses.

7. Procédé selon l'une des revendications précédentes, **caractérisé en ce qu'**il ne comprend, après l'étape b), aucune étape de finition, et notamment aucune étape de traitement tribologique.

8. Axe de pivotement horloger (1) comprenant au moins un pivot (2) à au moins une de ses extrémités, au moins ledit pivot (2) étant entièrement réalisé en verre métallique, **caractérisé en ce que** ledit axe de pivotement horloger (1) est susceptible d'être obtenu par le procédé selon l'une des revendications 1 à 7, dans lequel au moins le pivot (2) présente une rugosité Ra uniforme inférieure ou égale à 50 nm ± 20%, de préférence inférieure ou égale à 25 nm, de préférence inférieure ou égale à 20 nm, de préférence inférieure ou égale à 15 nm, et préférentiellement inférieure ou égale à 12 nm, plus préférentiellement inférieure ou égale à 10 nm, et plus préférentiellement comprise entre 5 nm et 9 nm, bornes incluses.

9. Axe de pivotement horloger (1) selon la revendication 8, **caractérisé en ce que** le verre métallique est amagnétique.

10. Axe de pivotement horloger (1) selon l'une des revendications 8 et 9, **caractérisé en ce qu'**il est intégralement réalisé en verre métallique.

11. Axe de pivotement horloger (1) selon l'une des revendications 8 à 10, **caractérisé en ce qu'**au moins le pivot (2) présente une dureté de surface supérieure ou égale à 700 HV, et de préférence supérieure ou égale à 800 HV.

12. Axe de pivotement horloger (1) selon l'une des revendications 8 à 11, **caractérisé en ce que** le pivot (2) présente un diamètre extérieur inférieur à 200 µm, de préférence inférieur à 100 µm, préférentiellement inférieur à 90 µm, et plus préférentiellement inférieur à 70 µm.

13. Axe de pivotement horloger (1) selon l'une des revendications 8 à 12, **caractérisé en ce qu'**il est agencé pour former un axe de balancier.

14. Mouvement horloger comprenant un axe de pivotement horloger (1) selon l'une des revendications 8 à 13.

15. Pièce d'horlogerie comprenant un mouvement horloger selon la revendication 14 ou un axe de pivotement horloger (1) selon l'une des revendications 8 à 13.

## Patentansprüche

1. Verfahren zur Herstellung einer Uhrendrehachse (1), umfassend mindestens einen Zapfen (2) an mindestens einem ihrer Enden, wobei mindestens der besagte Zapfen (2) vollständig aus Metallglas gefertigt ist, wobei das besagte Verfahren umfasst:
a) einen Schritt zur Herstellung eines Rohlings der Uhrendrehachse (1), umfassend an mindestens einem Ende mindestens ein Teil, das aus Metallglas gebildet ist und dazu bestimmt ist, einen Zapfen zu bilden (2); **dadurch gekennzeichnet, dass** das besagte Verfahren
b) einen letzten Schritt umfasst, bestehend in einer Präzisionsbearbeitung ohne Krafteinwirkung mindestens des aus Metallglas gebildeten Teils, um mindestens einen Zapfen (2) zu erhalten, der vollständig aus fertigem Metallglas gefertigt ist.

2. Verfahren nach Anspruch 1, in welchem die Uhrendrehachse (1) gänzlich aus Metallglas gefertigt ist, **dadurch gekennzeichnet, dass** der Schritt a) durch Spritzgiessen ausgeführt wird.

3. Verfahren nach einem der Ansprüche 1 und 2, **dadurch gekennzeichnet, dass** es zwischen dem Schritt a) und dem Schritt b) einen Schritt a') zur Bearbeitung des Rohlings der Drehachse umfasst.

4. Verfahren nach Anspruch 3, **dadurch gekennzeichnet, dass** die Bearbeitung des Rohlings der Drehachse des Schritts a') ein Trowalisieren ist.

5. Verfahren nach einem der vorstehenden Ansprüche, **dadurch gekennzeichnet, dass** die während des Schritts b) ausgeführte Präzisionsbearbeitung ohne Krafteinwirkung ein Drehen durch Femto-Laser, elektrochemisches Drehen oder Drehen durch Elektroerosion ist.

6. Verfahren nach einem der vorstehenden Ansprüche, **dadurch gekennzeichnet, dass** mindestens der vollständig aus fertigem Metallglas gefertigte Zapfen (2), der in Schritt b) erhalten wurde, eine gleichmässige Rauheit Ra von weniger oder gleich 50 nm ± 20 %, vorzugsweise von weniger oder gleich 25 nm, vorzugsweise von weniger oder gleich 20 nm, vorzugsweise von weniger oder gleich 15 nm, und bevorzugt von weniger oder gleich 12 nm, noch bevorzugter von weniger oder gleich 10 nm, und noch bevorzugter zwischen einschliesslich 5 nm und einschliesslich 9 nm aufweist.

7. Verfahren nach einem der vorstehenden Ansprüche, **dadurch gekennzeichnet, dass** es nach dem Schritt b) keinen Schritt zur Fertigstellung umfasst, und insbesondere keinen Schritt zur tribologischen Behandlung.

8. Uhrendrehachse (1), die mindestens einen Zapfen (2) an mindestens einem ihrer Enden umfasst, wobei mindestens der besagte Zapfen (2) vollständig aus Metallglas gefertigt ist, **dadurch gekennzeichnet, dass** die besagte Uhrendrehachse (1) durch das Verfahren nach einem der Ansprüche 1 bis 7 erhalten werden kann, in welchem mindestens der Zapfen (2) eine gleichmässige Rauheit Ra von weniger oder gleich 50 nm ± 20 %, vorzugsweise von weniger oder gleich 25 nm, vorzugsweise von weniger oder gleich 20 nm, vorzugsweise von weniger oder gleich 15 nm, und bevorzugt von weniger oder gleich 12 nm, noch bevorzugter von weniger oder gleich 10 nm, und noch bevorzugter zwischen einschliesslich 5 nm und einschliesslich 9 nm aufweist.

9. Uhrendrehachse (1) nach Anspruch 8, **dadurch gekennzeichnet, dass** das Metallglas unmagnetisch ist.

10. Uhrendrehachse (1) nach einem der Ansprüche 8 und 9, **dadurch gekennzeichnet, dass** sie gänzlich aus Metallglas gefertigt ist.

11. Uhrendrehachse (1) nach einem der Ansprüche 8 bis 10, **dadurch gekennzeichnet, dass** mindestens der Zapfen (2) eine Oberflächenhärte von mehr oder gleich 700 HV, und vorzugsweise von mehr oder gleich 800 HV aufweist.

12. Uhrendrehachse (1) nach einem der Ansprüche 8 bis 11, **dadurch gekennzeichnet, dass** der Zapfen (2) einen Aussendurchmesser von weniger als 200 µm, vorzugsweise von weniger als 100 µm, bevorzugt von weniger als 90 µm, und noch bevorzugter von weniger als 70 µm aufweist.

13. Uhrendrehachse (1) nach einem der Ansprüche 8 bis 12, **dadurch gekennzeichnet, dass** sie ausgelegt ist, um eine Unruhachse zu bilden.

14. Uhrwerk, das eine Uhrendrehachse (1) nach einem der Ansprüche 8 bis 13 umfasst.

15. Uhr, die ein Uhrwerk nach Anspruch 14 oder eine Uhrendrehachse (1) nach einem der Ansprüche 8 bis 13 umfasst.

## Claims

1. A method for manufacturing a timepiece pivot axis (1) comprising at least one pivot (2) at at least one of its ends, at least said pivot (2) being made entirely of metallic glass, said method comprising:
a) a step of manufacturing a blank of the timepiece pivot axis (1) comprising, at at least one end, at least one part constituted of metallic glass and intended to constitute a pivot (2); **characterised in that** said method comprises
b) a last step consisting of a no-force precision machining at least of the part constituted of metallic glass in order to obtain at least one pivot (2) made entirely of finished metallic glass.

2. The method according to Claim 1, in which the timepiece pivot axis (1) is made completely of metallic glass, **characterised in that** step a) is carried out by injection moulding.

3. The method according to any one of Claims 1 and 2, **characterised in that** it comprises, between step a) and step b), a step a') of machining the blank of the pivot axis.

4. The method according to Claim 3, **characterised in that** the machining of the blank of the pivot axis of step a') is a trovalisation.

5. The method according to any one of the preceding claims, **characterised in that** the no-force precision machining carried out during step b) is a turning by femto laser, an electrochemical turning, or a turning by electroerosion.

6. The method according to any one of the preceding claims, **characterised in that** at least the pivot (2) made entirely of finished metallic glass obtained in step b) has a uniform roughness Ra less than or equal to 50 nm ± 20%, preferably less than or equal to 25 nm, preferably less than or equal to 20 nm, preferably less than or equal to 15 nm, and preferably less than or equal to 12 nm, more preferably less than or equal to 10 nm, and more preferably between 5 nm and 9 nm, inclusive.

7. The method according to any one of the preceding claims, **characterised in that** it does not comprise, after step b), any finishing step and, in particular, it does not comprise any tribological treatment step.

8. A timepiece pivot axis (1) comprising at least one pivot (2) at at least one of its ends, at least said pivot (2) being made entirely of metallic glass, **characterised in that** said timepiece pivot axis (1) is likely to be obtained by the method according to any one of Claims 1 to 7, in which at least the pivot (2) has a uniform roughness Ra less than or equal to 50 nm ± 20%, preferably less than or equal to 25 nm, preferably less than or equal to 20 nm, preferably less than or equal to 15 nm, and preferably less than or equal to 12 nm, more preferably less than or equal to 10 nm, and more preferably between 5 nm and 9 nm, inclusive.

9. The timepiece pivot axis (1) according to Claim 8, **characterised in that** the metallic glass is non-magnetic.

10. The timepiece pivot axis (1) according to any one of Claims 8 and 9, **characterised in that** it is made completely of metallic glass.

11. The timepiece pivot axis (1) according to any one of Claims 8 to 10, **characterised in that** at least the pivot (2) has a surface hardness greater than or equal to 700 HV, and preferably greater than or equal to 800 HV.

12. The timepiece pivot axis (1) according to any one of Claims 8 to 11, **characterised in that** the pivot (2) has an outer diameter less than 200 µm, preferably less than 100 µm, preferably less than 90 µm, and more preferably less than 70 µm.

13. The timepiece pivot axis (1) according to any one of Claims 8 to 12, **characterised in that** it is arranged to form a balance staff.

14. A watch movement comprising a timepiece pivot axis (1) according to any one of Claims 8 to 13.

15. A timepiece comprising a watch movement according to Claim 14 or a timepiece pivot axis (1) according to any one of Claims 8 to 13.
